# EUROPEAN PATENT SPECIFICATION

(11) **EP 1 627 762 B1**
(45) Date of publication and mention of the grant of the patent: **01.10.2008**
(21) Application number: 05013767.8
(22) Date of filing: 25.06.2005
(51) Int. Cl.: B60K 17/16

(54) **Agricultural tractor**
Landwirtschaftlicher Traktor
Tracteur agricole

(30) Priority: 17.08.2004 GB 0418315
(43) Date of publication of application: 22.02.2006
(73) Proprietor: AGCO GmbH, 87616 Marktoberdorf (DE)
(72) Inventor: Rathke, Gerd, 87616 Marktoberdorf (DE); Reisch, Johann, 87616 Marktoberdorf (DE)
(74) Representative: Morrall, Roger

(56) References cited:
- WO-A-02/22427
- US-A- 5 820 150
- US-B1- 6 516 914

## Description

The invention relates to an agricultural vehicle, especially a tractor, including a chassis separately supporting the front wheels. The front wheels are controlled by a steering cylinder arranged on the chassis and driven by output shafts of a differential gear having a differential gear box.

A tractor having the features mentioned above is known from WO 02/22427 A2. The chassis of this vehicle comprises a housing made of cast iron serving to house the differential gear to drive the suspended front wheels and the brakes if any. In the region above the differential gear the housing is designed to form the oil reservoir of the engine above the differential. Points for fixing elements of the wheel suspension like the upper and the lower transverse links are arranged on the sides of the housing. Screws screwed into respective threads provided in the housing are used for fixing. Such a chassis construction has the disadvantage of a large expenditure of work and high costs for spare parts even in case of small damage to the housing. During the hard use of such a tractor it is possible that screws are pulled out or other damage occurs with respect to the housing. In this case the whole housing has to be replaced. To do this, the engine has to be dismounted, the oil reservoir has to be emptied and the wheel suspension of both sides has to be dismounted. This is an expensive procedure.

US-B1-6516914 representing the closest known prior art, discloses a heavy duty vehicle including a chassis which supports front wheels, driven by output shafts of a differential gear, the front portion of the chassis comprising two longitundinally extending frame members which carry the front wheels, the differential gear has a gearbox, and the frame members have inside support surfaces of planar form onto which the differential gearbox is detachably secured so that the gearbox is located between the frame members.

It is the object of the invention to provide an agricultural vehicle of the type mentioned above having an improved chassis with a decreased service time in the area of the front wheels when repair is necessary.

This is achieved by providing an agricultural vehicle, especially a tractor, including a chassis which separately supports front wheels of the vehicle and which includes a housing which supports an engine, the front wheels being controllable by a steering cylinder arranged on the chassis and driven by output shafts of a differential gear, the vehicle being characterised in that a front portion of the chassis comprises two longitundinally extending frame members which carry the front wheels, rear portions of the frame members being secured by screws to the front portion of the housing, in that the differential gear has a gearbox, and in that the frame members have inside support surfaces of planar form onto which the differential gearbox is detachably secured so that the gearbox is located between the frame members.

The invention provides for three separate and independent elements in the driving area of the vehicle. Two elements, the frame members, are part of the chassis and the third element is the differential gear box which, is free of a supporting function. The differential gear box easily may be dismounted or replaced in case of damage without having the need to dismount the other elements.

Further details and advantages are the subject of the other claims.

To make the differential gear box accessible it is only necessary to unscrew the differential gear box from the frame members and to take off the driving connection to the front wheels in the region between the frame members. The differential gear box is arranged and protected between the frame members and also increases the stability in the front region of the chassis. In general, there are several possibilities to position the differential gear box in its assembled place or to dismount it. The differential gear box may be mounted and fixed from above when the area above is already free of other elements. On the other hand, the differential gear box in case of repair may be dismounted and mounted from below after unscrewing the fixing points and without dismounting the frame members. Consequently, it is not necessary to remove other elements like the radiator, conduits and so on.

According to the features of claim 2 it is advantageous to provide an output shaft between the differential gear and each front wheel. The output shafts are located outside the area between the two the planar support surfaces and are detachably mountable to be connected with the driven pinions of the differential gear by socket shafts. The socket shafts may easily be removed after the loosening of some screws and the differential gear box may then be removed from its place between the frame members. This is possible in upward, or in downward or in inclined direction to the front depending on the construction of the vehicle.

According to the features of claim 3 the driving pinion of the differential gear is arranged in the differential gear box. The driving pinion and the differential gear box are one unit making the mounting and the dismounting easy. The connection of the input shaft supporting the driving pinion may be arranged outside the differential gear box at a place which has good accessibility.

The features of claim 4 propose to arrange a brake as an integral part of each of the frame members. The brake acts on the output shafts of the differential gear. The positioning of the brakes is independent of the differential gear box. Each of the brakes is easily accessible by removing the frame part involved. Inspection and repair of the brakes may be done without inspecting the differential gear.

In addition, the features of claims 5 and 6 provide for the elements of the brakes to be housed within the frame members outside the area between the support surfaces. The brakes integrated in the frame parts are designed as disc brakes. This makes it possible to mount and dismount the differential gear in the manner described above as far as vehicles are concerned having a front wheel drive.

According to the features of claim 7 the differential gear box has an oil reservoir which is connected with oil reservoirs of the brakes. This reduces the control of the oil to a minimum. In the differential gear box there is an effective cooling effect on the oil heated in the brakes.

According to claim 8 it is provided that each brake is formed as unit positioned on a brake cover. A recess is provided in each of the frame parts to receive the associated brake and to be closed by the brake cover. This improves the accessibility of the brakes for service and repair.

According to the features of claims 9 and 10 it is useful to arrange the steering cylinder in a fixed manner on the frame member, especially in front of the differential gear box.

According to the feature of claim 11 the frame parts are connected by a protecting tube and the steering cylinder is located in the protecting tube. The protecting tube increases the stability of the chassis against distortion. The steering cylinder and sensors cooperating with the steering cylinder are arranged inside the protecting tube protected against all environment influences.

The invention is described by way of example only, in greater detail with respect of the accompanying drawings in which:-
- **Fig. 1**: shows a block-type chassis of a tractor in accordance with the present invention including the suspension of the front wheels;
- **Fig. 2**: shows a chassis of a tractor according Fig. 1 without the wheel suspension.
- **Fig. 3**: shows a frame type chassis of a tractor in accordance with the present invention;
- **Fig. 4**: shows a horizontal cross section of a first embodiment of the front part of the chassis according Fig. 2, and
- **Fig. 5**: shows a cross sectional view of a second embodiment of the front part of the chassis according Fig. 2.

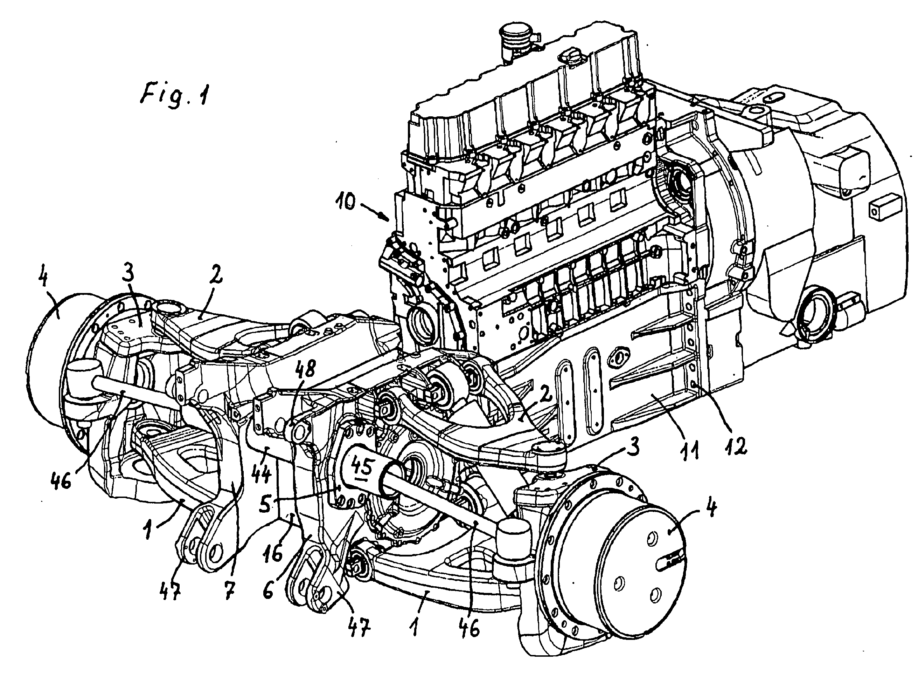

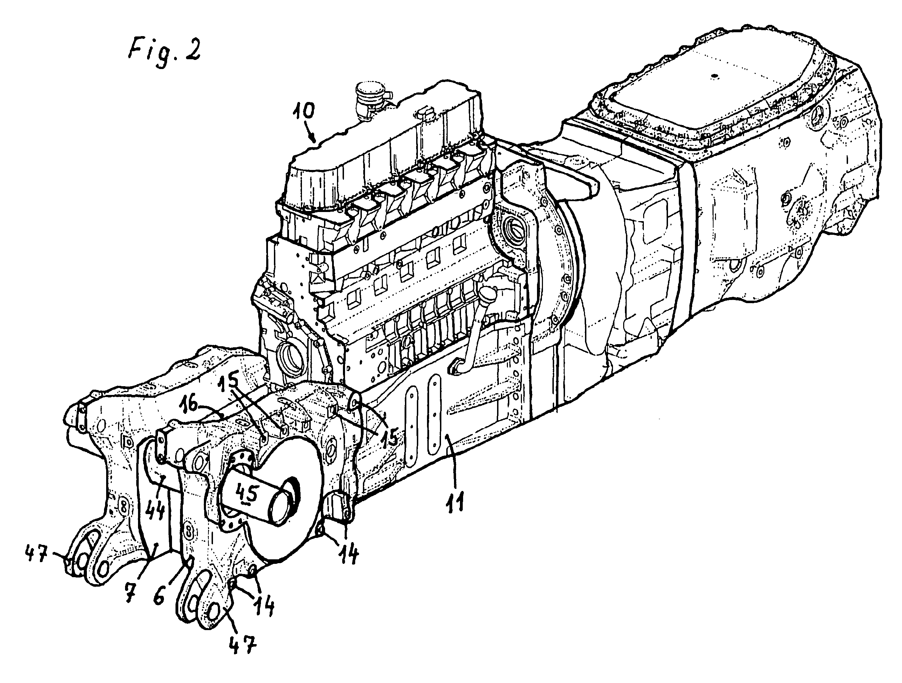

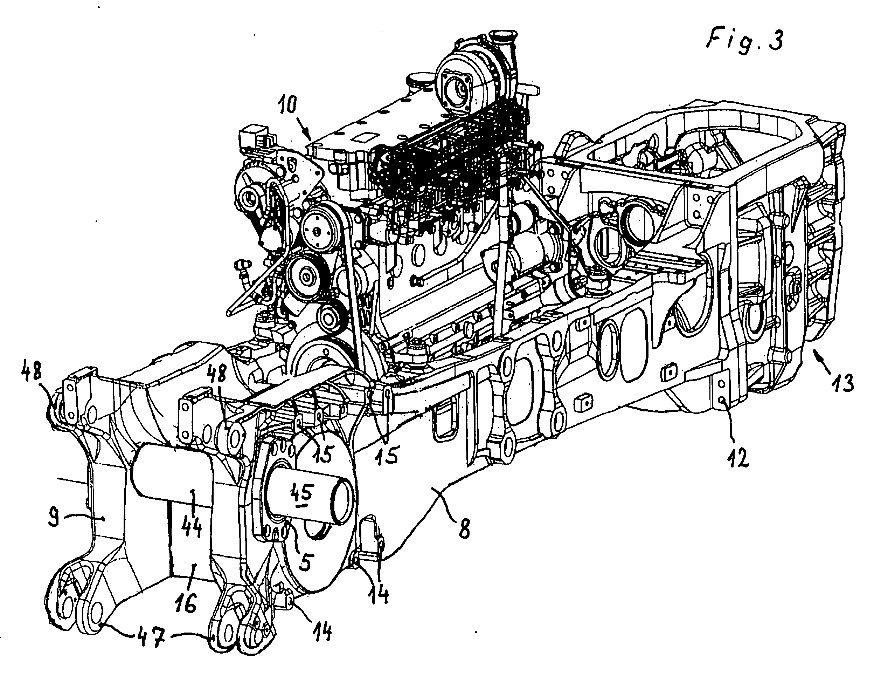

Figs. 1, 2 and 3 show the front part of a chassis of a tractor. A "chassis" has to be understood to be in general a supporting structure, in form of a block design or a frame construction. These two types of chassis differ since in a vehicle with block type chassis the engine and the gear box to drive the rear wheels form a stiff block structure which is load bearing, while in a vehicle with frame construction chassis the engine is supported by two frame parts extending from the gear box to the front and the engine is no part of the supporting load bearing construction. The chassis comprises two separate wheel suspensions supporting the front wheels. For reason of clarity in Figs. 2 and 3 the suspension of the front wheels is not shown. In Fig. 1 instead of the front wheels the wheel hubs and the suspension are illustrated only.

On each side of the chassis the wheel suspension in known manner comprises a lower transverse link 1 and an upper transverse link 2, each connected to the chassis. A steering housing 3 pivotally arranged about an approximately vertical axis is positioned at the free ends of the transverse links 1 and 2. The wheel hub 4 of a front wheel is located on the steering housing 3 for rotatation. A steering cylinder 5 is provided to pivot the steering housing 3.

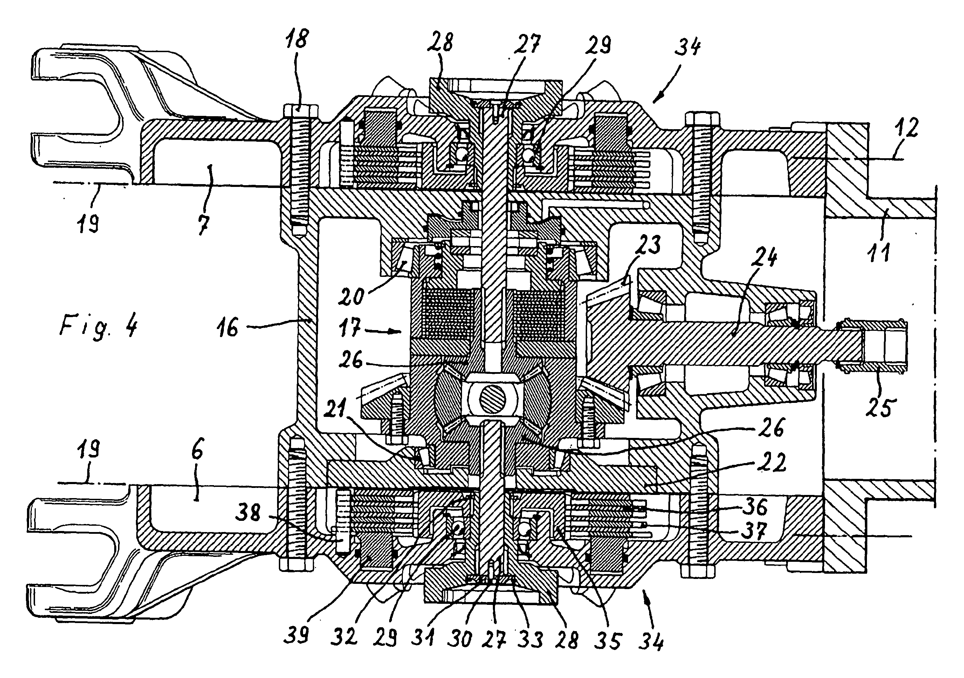

Independent from the main part of the chassis, frame parts or members 6, 7, 8, 9 are provided at least in the region of the wheel suspension. The frame members are of identical mirror like construction. The upper transverse links 1 and the lower transverse links 2 of the wheel suspensions are connected to the frame members by fixing eyes 14 and 15 respectively. Fig. 4 shows an arrangement to be used with a chassis having block design or with a chassis having a frame construction.

In Fig. 4 a housing part 11 of the chassis is illustrated which supports the engine 10. The frame members 6 and 7 extending in parallel from the housing 11 to the front and are secured to the housing by screws 12. The frame members 6 and 7 are made of cast iron. The inside surfaces of the frame members 6 and 7 facing each other are machined to a planar form and are positioned apart by a distance adapted to the width of the differential gear box 16 housing the differential gear 17 serving to drive the wheel hubs 4. The differential gear box 16 forming a completely pre-assembled unit is placed between the frame parts 6 and 7. Depending on the stage of assembly of the vehicle this can be done from above or from below, but also from the front inclined upwardly, i.e. from the left in the drawing. In its assembled position the differential gear box 16 is connected to the frame parts 6 and 7 by screws 18. The planar or surfaces on frame members 6 and 7 to which the gearbox 16 are secured are indicated at 19 in Figure 4. As can be seen from Figures 1 to 3 the differential gearbox 16 is located between the frame members 6 and 7.

The differential gear 17 in the differential gear box 16 is of known type and therefore need not be explained in detail. The upper (Fig. 4) end part of the differential gear 17 is arranged directly in the differential gear box 16 in a rolling bearing 20. The other end is supported in a rolling bearing 21 located in a cover 22 closing an opening of the differential gear box serving for mounting purposes. The differential gear 17 is driven by a driving pinion 23, the driving shaft 24 of which is arranged in bearings and connected to a driving input shaft by a sleeve 25. Driven pinions 26 of the differential gear 17 are in driving connection with output shafts 28 via socket shafts 27 leading to the wheel hubs. The output shafts 28 are arranged in rolling bearings 29. The socket shafts 27 are provided with a spined shaft connection each serving for the transfer of the driving moment from the pinions 26 to the output shafts 28. The socket shafts 27 can be extracted for dismounting purposes.

Each socket shaft 27 is fixed by a screw 30 and a disc 31 acting with respect to a securing ring 32 positioned on the output shaft 28 to avoid undesired loosening during use of the vehicle. A securing ring 33 secures against falling out of the rolling bearing 29. The length of the output shafts 28 is limited to be inside the contour of the frame members 6 and 7 respectively as limited by the contacting plane 19 to make the insertion of the differential gear box 16 between the frame members 6, 7 possible for mounting and dismounting purposes. The output shafts 28 are in driving connection with the wheel hubs 4 by cardan shafts (not shown).

The brakes 34 of the front wheels are positioned in the frame members 6 and 7 respectively. The brakes are disc brakes of known construction. Each disc brake has a disc support 35 and discs 36 rotating with the output shaft 28. Discs 37 forming an interleaved stack with the discs 36 are connected to the frame members 6, 7 by bolts 38. The disc stack can be pressed by an annular piston 39 supported in the cover 22 to produce a braking effort. The overall width of the brakes 34 is designed in a manner that none of the elements extend outside the contour of the frame members 6, 7 as far as the limiting contacting plane 19 is concerned. Consequently, there is no part which could hinder the insertion of the differential gear box 16 between the frame members 6 and 7. To make the brakes 34 accessible for service it is necessary only to dismount the differential gear box 16 or the frame members 6, 7 or 8, 9 from the chassis. The differential gear box 16 remains as a part of the chassis.

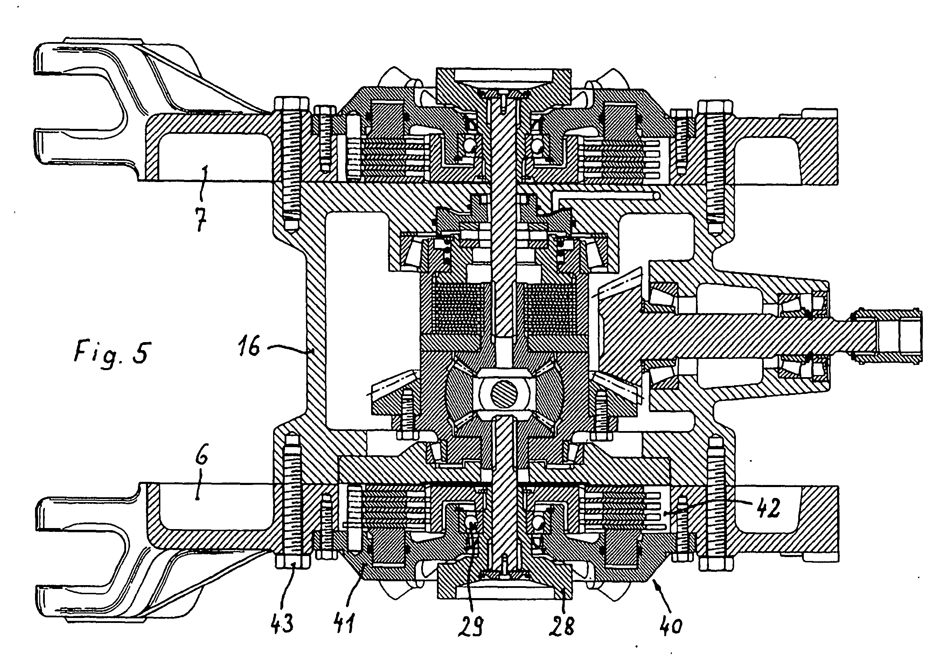

Fig. 5 shows an embodiment in which the brakes 40 are arranged on brake covers 41 instead directly on the frame members 6, 7; 8, 9 as shown in Fig. 4. The rolling bearing 29 of the output shaft 28 is arranged in the brake cover 41 also. The construction of the brake 40 is the same as to the brake 34. The brake cover 41 and brake 40 forms a pre-assembled unit which is inserted into a fitting recess 42 of the frame members 6, 7; 8, 9 and secured by screws 43.

The frame members 6, 7 ;8, 9 are connected to each other in the region in front of the differential gear box 16 by a protecting tube 44 in a manner not to be dismounted. This serves to define the distance between the frame parts and stabilise the chassis. The steering cylinder 5 is located in the protecting tube 44 and screwed to the frame members 6, 7 by a flange. In this manner the steering cylinder 5 and sensors cooperating with the steering cylinder are placed inside the protecting tube 44 and protected from environment influences. The piston rod 45 of the steering cylinder 5 is connected in known manner by a track rod 46 to the steering housing 3 of the wheel suspension.

The frame members 6, 7 ; 8, 9 include two lower fixing eyes 47 and two upper fixing eyes 48 both in the front region as to be seen from Figs. 1 to 3. The lower eyes 47 serve to place the lower links of a power lift (not shown), while the upper eyes 48 carry lifting cylinders (not shown). Any working equipment carried by the front power lift thus advantageously has a small distance to the front wheels because the eyes 47, 48 are arranged directly on the frame members 6, 7; 8, 9.

## Claims

1. Agricultural vehicle, especially a tractor, including a chassis which separately supports front wheels of the vehicle and which includes a housing (11) which supports an engine (10), the front wheels being controllable by a steering cylinder arranged on the chassis and driven by output shafts (28) of a differential gear (17), a front portion of the chassis comprising two longitudinally extending frame members (6,7:8,9) which carry the front wheels, rear portions of the frame members being secured by screws to the front portion of the housing (11), the differential gear (17) having a gearbox (16), and the frame members (6,7:8,9) having inside support surfaces of planar form (19) onto which the differential gearbox (16) is detachably secured so that the gearbox is located between the frame members.

2. A vehicle according to claim 1 **characterised in that** an output shaft (28) is provided between the differential gear (17) and each front wheel, the output shafts (28) being located outside an area between the two planar support sufaces (19) and being detachably mountable to be connected with driven pinions (26) of the differential gear (17) by socket shafts (27).

3. A vehicle according to claim 1, **characterised in that** a driving pinion (23) of the differential gear (17) is arranged in the differential gear box (16).

4. A vehicle according to claim 2, **characterised in that** a brake (34,40) is arranged as an integral part of each of the frame member (6, 7; 8, 9), the brake acting on the output shafts (28) of the differential gear (17).

5. A vehicle according to claim 4, **characterised in that** the brakes (34,40) are housed within the frame parts (6,7:8,9) outside the area between the support surfaces (19).

6. A vehicle according to claims 4 and 5, **characterised in that** the brakes (34,40) integrated in the frame parts (6, 7;8, 9) are disc brakes.

7. A vehicle according to claims 4 to 6, **characterised in that** the differential gearbox (16) has an oil reservoir which is connected with oil reserviors of the brakes (34,40).

8. A vehicle according to one or more of the claims 4 to 7, **characterised in that** each brake (40) is formed as a unit positioned on a brake cover (41) and a recess (42) is provided in each frame parts (6, 7;8, 9) to receive the associated brake and to be closed by the brake cover (41).

9. A vehicle according to claim 1, charaterised in that he steering cylinder (5) is arranged in a fixed manner on the frame members (6,7;8,9).

10. A vehicle according to claim 9, **characterised in that** hte steering cylinder (5) is arrnaged in front of the differential gearbox (16).

11. A vehicle according to one or more of the claims 1 to 11, **characterised in that** the frame parts (6, 7;8, 9) are connected by a protecting tube (44) and the steering cylinder (5) is located in the protecting tube (44).

12. A vehcile according to claim 1, **characterised in that** in front of the frame parts (6, 7;8, 9) fixing eyes (47, 48) are provided for the attachment of a front power lift.

## Patentansprüche

1. Landwirtschaftliches Fahrzeug, insbesondere Traktor, mit einem Chassis, welches separat Vorderräder des Fahrzeuges abstützt und welches ein Gehäuse (11) besitzt, welches einen Motor (10) unterstützt, wobei die Vorderräder durch einen lenkenden Zylinder steuerbar sind, der auf dem Chassis angeordnet ist, und durch Ausgangswellen (28) eines Differentialgetriebes (17) angetrieben sind, wobei ein vorderer Bereich des Chassis zwei sich in Längsrichtung erstreckende Rahmenelemente (6,7:8,9) besitzt, die die Vorderräder tragen, hintere Bereiche der Rahmenelemente durch Schrauben an dem vorderen Bereich des Gehäuses (11) gesichert sind, das Differentialgetriebe (17) ein Getriebe oder Getriebegehäuse (16) besitzt und die Rahmenelemente (6,7:8,9) innen liegend Unterstützungsflächen in ebener Form (19) besitzen, auf denen das Getriebegehäuse (16) derart lösbar befestigt oder gesichert ist, dass das Getriebegehäuse zwischen den Rahmenelementen angeordnet ist.

2. Fahrzeug nach Anspruch 1, **dadurch gekennzeichnet, dass** eine Ausgangswelle (28) zwischen dem Differentialgetriebe (17) und jedem Vorderrad vorgesehen ist, wobei die Ausgangswellen (28) außerhalb eines Bereiches zwischen den beiden ebenen Unterstützungsflächen (19) angeordnet sind und lösbar montierbar sind für eine Verbindung mit angetriebenen Ritzeln (26) des Differentialgetriebes (17) durch Wellen (27) (engl.: "socket shafts").

3. Fahrzeug nach Anspruch 1, **dadurch gekennzeichnet, dass** ein antreibendes Ritzel (23) des Differentialgetriebes (17) in dem Differentialgetriebegehäuse (16) angeordnet ist.

4. Fahrzeug nach Anspruch 2, **dadurch gekennzeichnet, dass** eine Bremse (34,40) als ein integrales Teil jedes der Rahmenelemente (6,7;8,9) angeordnet ist, wobei die Bremse auf die Ausgangswellen (28) des Differentialgetriebes (17) wirkt.

5. Fahrzeug nach Anspruch 4, **dadurch gekennzeichnet, dass** die Bremsen (34,40) in den Rahmenteilen (6,7:8,9) außerhalb des Bereiches zwischen den Unterstützungsflächen (19) aufgenommen sind.

6. Fahrzeug nach Anspruch 4 oder 5, **dadurch gekennzeichnet, dass** die Bremsen (34,40), die in die Rahmenteile (6,7;8,9) integriert sind, Scheibenbremsen sind.

7. Fahrzeug nach einem der Ansprüche 4 bis 6, **dadurch gekennzeichnet, dass** das Differentialgetriebegehäuse (16) ein ölreservoir besitzt, welches mit Ölreservoirs der Bremsen (34,40) verbunden ist.

8. Fahrzeug nach einem oder mehreren der Ansprüche 4 bis 7, **dadurch gekennzeichnet, dass** jede Bremse (40) als eine Einheit gebildet ist, die auf einer Bremsabdeckung (41) angeordnet ist und dass eine Ausnehmung (42) in jedem Rahmenteil (6,7;8,9) vorgesehen ist, die einer Aufnahme der zugeordneten Bremse dient und die durch die Bremsabdeckung (41) geschlossen wird.

9. Fahrzeug nach Anspruch 1, **dadurch gekennzeichnet, dass** der lenkende Zylinder (5) in fester Weise auf den Rahmenelementen (6,7;8,9) angeordnet ist.

10. Fahrzeug nach Anspruch 9, **dadurch gekennzeichnet, dass** der lenkende Zylinder (5) vor dem Differentialgetriebegehäuse (16) angeordnet ist.

11. Fahrzeug nach einem oder mehreren der Ansprüche 1 bis 11, **dadurch gekennzeichnet, dass** die Rahmenteile (6,7;8,9) durch ein Schutzrohr (44) verbunden sind und der lenkende Zylinder (5) in dem Schutzrohr (44) angeordnet ist.

12. Fahrzeug nach Anspruch 1, **dadurch gekennzeichnet, dass** vor den Rahmenteilen (6,7;8,9) fixierende Augen (47, 48) vorgesehen sind, die einer Befestigung eines vorderen Power-Lifts dienen.

## Revendications

1. véhicule agricole, en particulier un tracteur, comprenant un châssis qui supporte séparément les roues avant du véhicule et qui comprend un carter (11) qui supporte un moteur (10), les roues avant pouvant être commandées par un vérin de direction agencé sur le châssis et étant entraînées par des arbres de sortie (28) d'un mécanisme différentiel (17), une partie avant du châssis comprenant deux éléments de structure s'étendant longitudinalement (6, 7 ; 8, 9) qui portent les roues avant, les parties arrière des éléments de structure étant fixées par des vis à la partie avant du carter (11), le mécanisme différentiel (17) ayant une boîte d'engrenages (16), et les éléments de structure (6, 7 ; 8, 9) ayant des surfaces de support intérieures de forme plane (19) sur lesquelles la boîte d'engrenages (16) du différentiel est fixée de façon détachable de sorte que la boîte d'engrenages est située entre les éléments de structure.

2. Véhicule selon la revendication 1, **caractérisé en ce qu'**un arbre de sortie (28) est prévu entre le mécanisme différentiel (17) et chaque roue avant, les arbres de sortie (28) étant situés en dehors d'une zone définie entre les deux surfaces de support planes (19) et pouvant être montés de façon détachable pour être connectés à des pignons entraînés (26) du mécanisme différentiel (17) par des arbres intermédiaires (27).

3. Véhicule selon la revendication 1, **caractérisé en ce qu'**un pignon d'entraînement (23) du mécanisme différentiel (17) est placé dans la boîte d'engrenages (16) du différentiel.

4. Véhicule selon la revendication 2, **caractérisé en ce qu'**un frein (34, 40) est agencé comme une partie intégrante de chacun des éléments de structure (6, 7 ; 8, 9), le frein agissant sur les arbres de sortie (28) du mécanisme différentiel (17).

5. Véhicule selon la revendication 4, **caractérisé en ce que** les freins (34, 40) sont logés dans les éléments de structure (6, 7 ; 8, 9) en dehors de la zone définie entre les surfaces de support (19).

6. Véhicule selon les revendications 4 et 5, **caractérisé en ce que** les freins (34, 40) intégrés dans les éléments de structure (6, 7 ; 8, 9) sont des freins à disque.

7. Véhicule selon les revendications 4 à 6, **caractérisé en ce que** la boîte d'engrenages (16) du différentiel comprend un réservoir d'huile qui est connecté à des réservoirs d'huile des freins (34, 40),

8. Véhicule selon une ou plusieurs des revendications 4 à 7, **caractérisé en ce que** chaque frein (40) est sous la forme d'une unité placée sur un couvercle de frein (41), et un évidement (42) est prévu dans chaque élément de structure (6, 7 ; 8, 9) pour recevoir le frein associé et être fermé par le couvercle de frein (41).

9. Véhicule selon la revendication 1, **caractérisé en ce que** le vérin de direction (5) est disposé d'une manière fixe sur les éléments de structure (6, 7 ; 8, 9).

10. Véhicule selon la revendication 9, **caractérisé en ce que** le vérin de direction (5) est disposé à l'avant de la boîte d'engrenages (16) du différentiel.

11. Véhicule selon une ou plusieurs des revendications 1 à 10, **caractérisé en ce que** les éléments de structure (6, 7 ; 8, 9) sont reliés par un tube de protection (44) et le vérin de direction (5) est placé dans le tube de protection (44).

12. Véhicule selon la revendication 1, **caractérisé en ce que**, à l'avant des éléments de structure (6, 7 ; 8, 9), des oeillets de fixation (47, 48) sont prévus pour la fixation d'un élévateur avant.
